Europäisches Patentamt

European Patent Office

Office européen des brevets

(19)

(11) **EP 0 546 614 B1**

(12) **EUROPÄISCHE PATENTSCHRIFT**

(45) Veröffentlichungstag und Bekanntmachung des Hinweises auf die Patenterteilung:
**07.05.1997 Patentblatt 1997/19**

(51) Int Cl.6: **H04Q 7/30**, H04L 27/233

(21) Anmeldenummer: **92203712.2**

(22) Anmeldetag: **01.12.1992**

(54) **Mobilfunkempfänger dessen verbesserte Anfangssysnchronisation mit einer Feststation durch Frequenzschätzung mittels Impulserkennung erreicht wird**

Mobile radio receiver of which the initial synchronisation with a fixed station is improved by frequency estimation impulse recognition

Récepteur radio mobile dont la synchronisation initiale avec la station fixe est améliorée par reconnaissance d'impulsions permettant l'estimation de fréquence

(84) Benannte Vertragsstaaten:
**DE FR GB IT**

(30) Priorität: **07.12.1991 DE 4140389**

(43) Veröffentlichungstag der Anmeldung:
**16.06.1993 Patentblatt 1993/24**

(73) Patentinhaber:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB IT**

(72) Erfinder: **Frank, Georg, Dr.,**
**Philips Patentverwaltung GmbH**
**W-2000 Hamburg 1 (DE)**

(74) Vertreter: **Volmer, Georg, Dipl.-Ing. et al**
**Philips Patentverwaltung GmbH,**
**Röntgenstrasse 24**
**22335 Hamburg (DE)**

(56) Entgegenhaltungen:
**WO-A-91/10305**

- **PKI TECHNISCHE MITTEILUNGEN Bd. 1, 1990, Seiten 43 - 49 G.FRANK ET AL 'Anfangssynchronisation der Mobilstation im D-Netz'**

## Beschreibung

Die Erfindung betrifft einen Mobilfunkempfänger für ein Funkübertragungssystem mit einer Erkennungseinrichtung, die vorgesehen ist, ein empfangenes Digitalsignal nach Impulsen eines im Digitalsignal auf einer vorgebbaren Frequenz enthaltenen Frequenzkontrollsignals abzusuchen und deren Impulslagen zu ermitteln, und mit einer Frequenzschätzeinrichtung, die vorgesehen ist zur Bildung von Frequenzschätzwerten für die vorgebbare Frequenz.

Die Erfindung betrifft weiter ein Funkübertragungssystem mit einem derartigen Mobilfunkempfänger.

Derartige Mobilfunkempfänger werden beispielsweise für das gesamteuropäische Mobilfunksystem, welches in Deutschland als D-Netz bezeichnet wird, benötigt. Bei diesem Mobilfunksystem werden beispielsweise Sprachsignale in digitalisierter Form zusammen mit anderen digitalen Signalen in einem Zeit-Vielfach-Zugriffs-Verfahren (TDMA = time devision multiple access) übertragen. Hierzu ist das zur Verfügung stehende Frequenzband in Einzelfrequenzbänder aufgeteilt, wobei pro Einzelfrequenzband eine bestimmte Anzahl von Teilnehmerkanälen im Zeitmultiplex untergebracht sind. Das Zugriffsverfahren innerhalb einer Funkzelle ist synchron, d.h. die einzelnen Zeitschlitze sind in Rahmen organisiert. Bei der Aufnahme einer Verbindung zwischen einer Feststation und einer Mobilfunkstation besteht somit die Problematik einer Anfangssynchronisation.

In dem Aufsatz "Anfangssynchronisation der Mobilstation im D-Netz", G. Frank, W. Koch, PKI Technische Mitteilungen 1/1990, Seiten 43 bis 49 ist ein Mobilfunkempfänger der eingangs genannten Art beschrieben. Dabei wird zur Anfangssynchronisation zwischen einer Feststation und dem Mobilfunkempfänger auf einem Organisationskanal (Broadcast Control Channel BCCh) neben anderen Informationen ein Frequenzkontrollsignal (Frequency Correction Burst FCB) übertragen. Dieses Frequenzkontrollsignal dient der genauen Frequenzsynchronisation des Mobilfunkempfängers mit der Feststation und zur groben Synchronisation auf die Zeitschlitzlage. Das Frequenzkontrollsignal besteht aus einer Folge von 148 Nullen, die durch ein bestimmtes Modulationsverfahren, z.B. GMSK-Modulation in ein reines Sinussignal überführt werden, das gegenüber der Trägerfrequenz des empfangenen Digitalsignals um die Frequenz des Frequenzkontrollsignals verschoben ist. Zur Detektion des Frequenzkontrollsignals und damit zur Idendifikation des sogenannten Broadcast Control Channel (BCCh) ist eine als BCCh-Erkennung bezeichnete Erkennungseinrichtung vorgesehen. Die Erkennungseinrichtung sucht ein vom empfangenen Digitalsignal ableitbares Signal nach den auf dem Frequenzkontrollsignal beruhenden Impulsen ab. Dieses Absuchen erfolgt in mehreren aufeinanderfolgenden Beobachtungsintervallen. Aus dem Frequenzkontrollsignal werden Impulse abgeleitet, deren zeitliche Impulslage und deren Maximalwert bestimmt werden. Aus der Höhe der Impulse wird durch Mittelwertbildung ein Kriterium über den erfolgten Empfang des Frequenzkontrollsignals abgeleitet. Wenn kein Frequenzkontrollsignal gefunden wurde, stellt eine Steuereinheit einen neuen Frequenzkanal für eine weitere Suche ein. Ist das Frequenzkontrollsignal sicher erkannt, wird aus der zeitlichen Lage der detektierten Maxima der erkannten bzw. detektierten Impulse die Zeitverschiebung des Frequenzkontrollsignals bestimmt. Anschließend wird eine Frequenzschätzeinrichtung aktiviert, die Frequenzschätzwerte für die Frequenz des Frequenzkontrollsignals berechnet. Aus einer größeren Anzahl von Frequenzschätzungwerten der Frequenzschätzeinrichtung wird dann ein Wert zur Freeines im HF-Teil des Mobilfunkempfängers angeordneten Lokaloszillators ermittelt.

Der Erfindung liegt die Aufgabe zugrunde, die Anfangssynchronisation eines Mobilfunkempfängers der eingangs genannten Art mit einer Feststation zu verbessern.

Diese Aufgabe wird bei einem Mobilfunkempfänger der eingangs genannten Art dadurch gelöst, daß die Erkennungseinrichtung einen Mittelwertbildner aufweist, der vorgesehen ist zur mit Gewichtungsfaktoren gewichteten Mittelwertbildung von innerhalb aufeinanderfolgender Beobachtungsintervalle ermittelten Impulslagen, wobei die Gewichtungsfaktoren von der jeweiligen Impulshöhe der Impulse abhängig sind.

Als Eingangssignal der Erkennungseinrichtung dient dabei beispielsweise das Digitalsignal oder ein vom empfangenen Digitalsignal ableitbares Signal, das aus dem Digitalsignal durch Bildung von Normal- und Quadraturkomponente des Basisbandsignals des empfangenen Digitalsignals gewonnen wird. Das aus dem empfangenen Digitalsignal ableitbare Signal wird zunächst schmalbandig mittels eines Bandpasses gefiltert, dessen Bandbreite auf die maximal zu erwartende Frequenztoleranz der auf dem Frequenzkontrollsignal beruhenden Impulse abgestimmt ist. Anschließend erfolgt eine Betragsbildung des gefilterten Signals, wodurch ein das Frequenzkontrollsignal kennzeichnender rechteckähnlicher Impuls von der Dauer eines Zeitschlitzes hervorgerufen wird. Ein derartiger Rechteckimpuls wird mit Hilfe eines optimalen Suchfilters (Matched Filter) gefiltert. Die Detektion der Impulslagen erfolgt nun durch Ermittlung des Maximums des Ausgangssignals des Suchfilters jeweils innerhalb eines Beobachtungsintervalls. Ein Beobachtungsintervall weist dabei eine Länge auf, die mindestens so groß wie der größte Abstand zwischen zwei aufeinanderfolgenden auf dem Frequenzkontrollsignal beruhenden Impulsen sein muß. Die Bestimmung der Lage des Maximums im Beobachtungsintervall liefert die Information über die Impulslage. Dabei kennzeichnet das Maximum immer das Ende eines Frequenzkontrollsignals. Durch die anschließend vorgesehene gewichtete Mittelwertbildung der so innerhalb aufeinanderfolgender Beobachtungsintervalle ermittelten Impulse ergibt sich eine hohe Auswertegenauigkeit. Der Mittelwertbildner wichtet dabei die innerhalb aufeinanderfolgender Beobachtungsintervalle ermittelten Impulse entsprechend ihrer jeweiligen Impulshöhe. Dabei ergibt sich mit steigender Anzahl der Mittelungen eine erhöhte Genauigkeit. Durch die verbesserte Auswertegenauigkeit ergibt sich auch eine verbesserte Anfangssynchronisation des Mobilfunkempfängers mit einer Feststation.

Eine mögliche Abhängigkeit der Gewichtungsfaktoren von der jeweiligen Impulshöhe zur Erzielung einer guten Anfangssynchronisation wird dadurch erreicht, daß die Gewichtungsfaktoren proportional zur jeweiligen Impulshöhe der Impulse sind.

Eine weiter verbesserte Auswertegenauigkeit ergibt sich dadurch, daß die Erkennungseinrichtung einen ersten Schwellwertbildner aufweist, der vorgesehen ist, nur die Impulse zu berücksichtigen, deren Impulshöhen einen vorgebbaren Schwellwert überschreiten.

Eine genaue Detektion der exakten Impulslage wird dadurch möglich, daß die Erkennungseinrichtung und/oder die Frequenzschätzeinrichtung ein Bandpaßfilter zur Filterung des Digitalsignals bzw. eines aus dem Digitalsignal ableitbaren Signals oder einen Frequenzmischer zur komplexen Multiplikation des Digitalsignals oder des aus dem Digitalsignal ableitbaren Signals mit einem vorgebbaren Mischsignal mit einem nachgeschalteten Tiefpaßfilter insbesondere mit einem linearen Phasengang aufweisen. Durch die Multiplikation erfolgt eine Frequenzverschiebung des vom empfangenen Digitalsignal ableitbaren Signals, so daß anstelle einer aufwendigen Bandpaßfilterung lediglich eine Tiefpaßfilterung der beiden Quadraturkomponenten erforderlich ist. Durch einen möglichst linearen Phasengang des Tiefpaßfilters, d.h. eine maximal flache Gruppenlaufzeit, wird die genaue Detektion der exakten Impulslagen möglich. Dabei kommt als Tiefpaßfilter insbesondere ein Filter mit Bessel-Charakteristik zum Einsatz.

Rechteckähnliche Impulse von der Dauer eines Zeitschlitzes, die dann der Detektion der Impulslagen des Frequenzkontrollsignals dienen, werden dadurch erhalten, daß die Erkennungseinrichtung nach dem Bandpaß- bzw. Tiefpaßfilter einen Betrags- oder Betragsquadratbildner aufweist. Durch Betragsquadratbildung anstelle einer Betragsbildung wird die Detektionssicherheit weiter erhöht. Eine schnelle und sichere Detektion der Impulse erfolgt dadurch, daß die Erkennungseinrichtung eine erste Entscheidungseinrichtung aufweist, die vorgesehen ist, durch Prüfung, ob in einer vorgebbaren Anzahl von Beobachtungsintervallen mindestens ein ermittelter Impuls eine vorgebbare Schwelle überschreitet, ein bei der Ermittlung des Frequenzkontrollsignals berücksichtigtes erstes Entscheidungssignal zu ermitteln. Hierdurch steigt zwar die Wahrscheinlichkeit einer Vortäuschung eines Impulses, aber die Wahrscheinlichkeit für das Nichterkennen eines Impulses nimmt überproportional ab.

Eine nochmals erhöhte Sicherheit in der Entscheidung, ob ein Frequenzkontrollsignal vorliegt, ergibt sich dadurch, daß die Frequenzschätzeinrichtung Mittel zur Bildung eines einem ermittelten Frequenzschätzwert jeweils zugeordneten Gütemaßes aufweist, das auch zur Ermittlung des Frequenzkontrollsignals verwendbar ist. Eine weiter erhöhte Sicherheit bei der Detektion des Frequenzkontrollsignals ergibt sich dadurch, daß die Frequenzschätzeinrichtung eine zweite Entscheidungseinrichtung zur Ableitung eines bei der Ermittlung des Frequenzkontrollsignals berücksichtigten zweiten Entscheidungssignals aufweist.

Ein möglicher Weg zur Berechnung des Gütemaßes ergibt sich dadurch, daß die Mittel zur Bildung des Gütemaßes einen Kehrwertbildner aufweisen, der vorgesehen ist aus dem Kehrwert des quadratischen Abstandes des geschätzten und tatsächlichen Phasenverlaufs das Gütemaß zu ermitteln.

Eine sichere Ermittlung der Frequenzabweichung zwischen dem Lokaloszillator und dem Oszillator der Feststation ergibt sich dadurch, daß die Frequenzschätzeinrichtung einen Mittelwertbildner aufweist, der vorgesehen ist aus einer vorgebbaren Anzahl von Frequenzschätzwerten von ermittelten Frequenzkontrollsignalen und den jeweils zugeordneten Gütemaßen zur Nachführung des Oszillators des Mobilfunkempfängers gewichtet gemittelte Schätzwerte zu bilden.

Eine Verbesserung der Frequenzbestimmung wird dadurch erreicht, daß die Frequenzschätzeinrichtung einen zweiten Schwellwertbildner aufweist, der vorgesehen ist, nur die einen vorgebbaren Schwellwert überschreitenden Gütemaße zu berücksichtigen.

Im folgenden wird die Erfindung anhand der in den Figuren dargestellten Ausführungsbeispiele näher erläutert. Es zeigen:

Fig. 1 ein Funkübertragungssystem mit einer Feststation und einem Mobilfunkempfänger,

Fig. 2 ein Ausführungsbeispiel einer Erkennungseinrichtung eines Mobilfunkempfängers,

Fig. 3 ein Ausführungsbeispiel einer Frequenzschätzeinrichtung eines Mobilfunkempfängers.

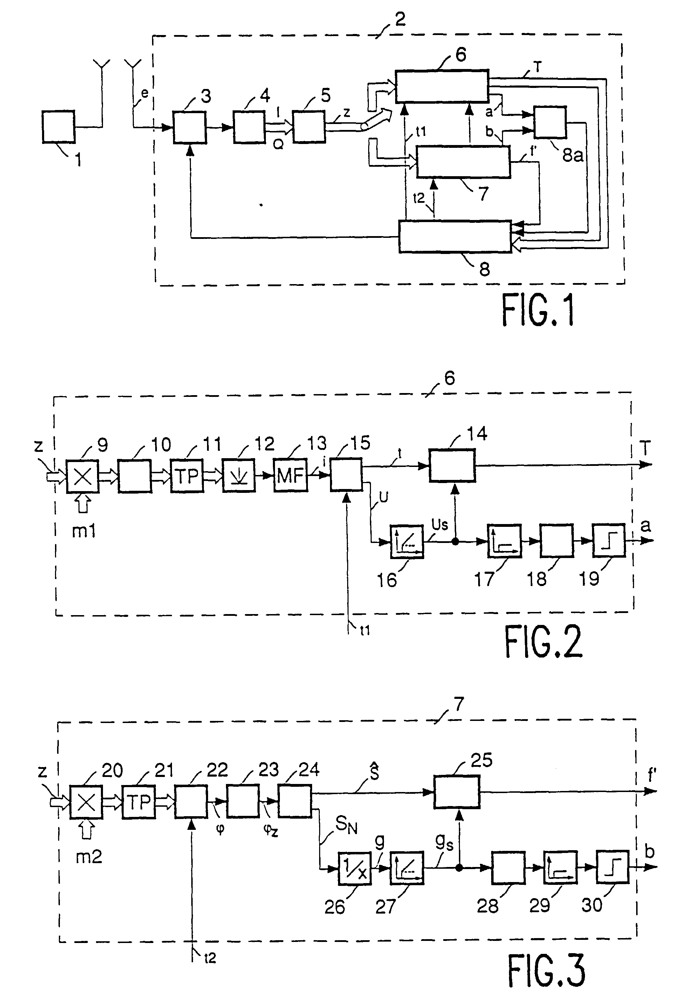

Fig. 1 zeigt ein Funkübertragungssystem mit einer Feststation 1 und einem Mobilfunkempfänger 2. Dabei ist vom Mobilfunkempfänger 2 lediglich die prinzipielle Anordnung zur Anfangssynchronisation mit den an der Anfangssynchronisation beteiligten Blöcken dargestellt. Ein derartiger Mobilfunkempfänger 2 ist beispielsweise für das GSM-System einsetzbar. Ein empfangenes Digitalsignal e wird zunächst einem HF-Empfangsteil 3 zugeführt. Mittels einer Einrichtung 4 zur Erzeugung von Normal- und Quadratur-Komponenten I, Q erfolgt eine zweikanalige Umsetzung ins Basisband, wie dies beispielsweise in DE-A 39 38 126.9 beschrieben ist. Die Quadratur-Komponenten I, Q werden in einem Analog-Digital-Wandler 5 abgetastet und analog/digital gewandelt. Am Ausgang des Analog-Digital-Wandlers 5 liegt dann ein Signal z mit Realteil (= Normalkomponente) und Imaginärteil (= Quadraturkomponente). Das Signal z wird einer Erkennungseinrichtung 6 und/oder einer Frequenzschätzeinrichtung 7 zugeführt.

In der Erkennungseinrichtung 6 wird das Digitalsignal z nach Impulsen eines im empfangenen Digitalsignal e enthaltenen Frequenzkontrollsignals abgesucht. Die Erkennungseinrichtung liefert ein die Impulslage des Frequenzkontrollsignals kennzeichnendes Signal T sowie ein erstes Entscheidungssignal a.

Die Frequenzschätzeinrichtung 7 ermittelt aus Frequenzschätzwerten eine Frequenzabweichung f' sowie ein zweites Entscheidungssignal b. Die Entscheidungssignale a, b werden einer Auswerteeinrichtung 8a zugeführt, deren Ausgangssignal eine Steuerungseinrichtung 8 ansteuert. Die Ausgangssignale T, f' der Erkennungseinrichtung 6 und der Frequenzschätzeinrichtung 7 werden ebenfalls an die Steuerungseinrichtung 8 weitergeleitet. Die Steuerungseinrichtung 8 ist zur Nachführung der Frequenz eines im HF-Teil 3 des Mobilfunkempfängers 2 vorhandenen Lokaloszillators mit der Oszillatorfrequenz des Senders 1 mit dem HF-Teil 3 verbunden und liefert an die Erkennungseinrichtung 6 sowie an die Frequenzschätzeinrichtung 7 Taktsignale t1, t2.

Die Arbeitsweise des Mobilfunkempfängers 2 im Hinblick auf die prinzipielle Anfangssynchronisation zwischen Mobilfunkempfänger 2 und Feststation 1 ist in dem Artikel "Anfangssynchronisation der Mobilstation im D-Netz", G. Frank, W. Koch, PKI Technische Mitteilung 1/1990, näher beschrieben. Die Arbeitsweise der Erkennungseinrichtung 6 sowie der Frequenzschätzeinrichtung 7 ist im Zusammenhang mit den Fig. 2 und 3 näher erläutert.

Fig. 2 zeigt ein Ausführungsbeispiel einer Erkennungseinrichtung 6 für einen Mobilfunkempfänger 2, wie er in Fig. 1 dargestellt ist. Dabei werden die bereits im Zusammenhang mit Fig. 1 eingeführten Bezugszeichen verwendet. Der Erkennungseinrichtung 6 wird ein aus dem empfangenen Digitalsignal abgeleitetes Signal z zugeführt. Dieses Signal wird in einem Frequenzmischer 9 mit einem vorgebbaren ersten Mischsignal m1 multipliziert. Nach Durchlaufen einer Amplitudenregeleinrichtung 10 mit nachgeschaltetem Tiefpaßfilter 11 ist ein Betragsbildner 12 vorgesehen. Die Erkennungseinrichtung 6 weist weiter ein optimales Suchfilter 13 (Matched Filter MF) auf. Das Suchfilter 13 liefert ein Ausgangssignal i, das die auf dem Frequenzkontrollsignal beruhenden Impulse kennzeichnet, so daß im folgenden das Bezugszeichen i auch zur Kennzeichnung der Impulse verwendet wird. Das Ausgangssignal i wird an eine Maximum-Erkennungseinrichtung 15 weitergeleitet. Der Maximum-Erkennungseinrichtung wird ein erstes Taktsignal t1 zugeführt. Am Ausgang der Maximum-Erkennungseinrichtung 15 liegen Signale t, U, wobei das Signal t die jeweilige Impulslage der auf dem Frequenzkontrollsignal beruhenden Impulse i und das Signal U deren zugehörige Impulshöhe kennzeichnet, so daß im folgenden auch das Bezugszeichen t zur Kennzeichnung einer Impulslage, d.h. eines ermittelten Impulses und das Bezugszeichen U zur Kennzeichnung der zugehörigen Impulshöhe verwendet wird. Das Signal t wird einem Mittelwertbildner 14 zugeführt, an dessen Ausgang ein die Impulslage des Frequenzkontrollsignals kennzeichnendes Signal T anliegt. Das Signal U wird an eine Einrichtung 16 weitergeleitet, die die Impulshöhen U, die einen vorgebbaren Schwellwert unterschreiten, ausscheidet. Am Ausgang der Einrichtung 16 liegt ein modifiziertes Signal Us, welches für eine gewichtete Mittelwertbildung dem Mittelwertbildner 14 zugeführt wird. Das modifizierte Signal Us wird darüberhinaus einer Entscheidungseinrichtung 17, 18, 19 zugeführt, an deren Ausgang ein erstes Entscheidungssignal a anliegt. Die Entscheidungseinrichtung 17, 18, 19 besteht aus einem Schwellwertschalter 17, einem nachgeschalteten Zähler 18 sowie einem Entscheider 19.

Die Verarbeitung des Digitalsignals z erfolgt bis zur Ermittlung der Signale t, U am Ausgang der Maximum-Erkennungseinrichtung 15 im wesentlichen in der bereits in PKI Technische Mitteilungen 1/1990, Seiten 43 bis 49, beschriebenen Art und Weise. Lediglich anstelle einer Betragsbildung kann der Betragsbildner 12 eine Betragsquadratbildung des Ausgangssignals des Tiefpasses 11 durchführen, wodurch die Detektionssicherheit erhöht wird. Das Tiefpaßfilter 11 weist zudem vorteilhafterweise einen linearen Phasengang auf, wie er insbesondere mittels eines Tiefpaßfilters 11 mit Bessel-Charakteristik realisierbar ist. Die Maximum-Erkennungseinrichtung 15 ermittelt eine Impulslage t jeweils relativ zum ersten Taktsignal t1, wobei die Periode des Taktsignals t1 der Länge eines Beobachtungsintervalls entspricht. Die Maximumsuche der Maximum-Erkennungseinrichtung 15 bezieht sich immer jeweils auf ein Beobachtungsintervall, das so groß gewählt wird, daß mindestens ein Frequenzkontrollsignal erfaßt wird. Zur Erhöhung der Detektionssicherheit Wiederholt die Maximum-Erkennungseinrichtung 15 die Maximumsuche in mehreren aufeinanderfolgenden Beobachtungsintervallen.

Der Mittelwertbildner 14 führt eine mit Gewichtungsfaktoren gewichtete Mittelwertbildung der ermittelten Impulslagen t durch. Dabei werden die Impulse t, deren Impulshöhen U einen vorgebbaren Schwellwert unterschreiten, bei der gewichteten Mittelwertbildung nicht berücksichtigt. Als Gewichtungsfaktoren für die so verbleibenden Impulse t werden die diesen Impulsen t zugeordneten Impulshöhen Us verwendet, die den durch die Einrichtung 16 festlegbaren Schwellwert überschreiten. Damit ergibt sich für die Bildung des die Impulslage des Frequenzkontrollsignals kennzeichnenden Ausgangssignals T der Erkennungseinrichtung 6: $T = \Sigma t \cdot Us / \Sigma Us$ . Zur Entscheidung, ob ein auf dem Frequenzkontrollsignal beruhender Impuls ermittelt wurde oder nicht, wird das Ausgangssignal Us der Einrichtung 16 in der Entscheidungseinrichtung 17, 18, 19 durch den Schwellwertschalter 17, den Zähler 18 sowie den Entscheider 19 ausgewertet. Das am Ausgang des Entscheiders 19 anliegende erste Entscheidungssignal a wird, wie dies in Fig. 1 dargestellt und in der Beschreibung zu Fig. 1 bereits beschrieben ist, von der in Fig 1 dargestellten Auswerteeinrichtung 8a ausgewertet. Durch die im Zusammenhang mit Fig. 2 beschriebenen Maßnahmen wird die Detektionssicherheit der Impulslagen entscheidend verbessert und es ergibt sich insgesamt eine verbesserte Anfangssynchronisation des Mobilfunkempfängers mit einer Feststation.

Fig. 3 zeigt ein Ausführungsbeispiel einer Frequenzschätzeinrichtung 7 für den in Fig. 1 dargestellten Mobilfunkempfänger 2. Der Frequenzschätzeinrichtung wird ein aus dem empfangenen Digitalsignal e ableitbares Signal z zugeführt. Anschließend erfolgt eine Bandbegrenzung, die aus einer äquivalenten Anordnung mit einem Frequenzmischer 20 und einem nachgeschalteten Tiefpaßfilter 21 gebildet wird. Dem Frequenzmischer 20 wird das Signal z sowie ein zweites Mischsignal m2 zugeführt. Nach dem Tiefpaßfilter 21 sind Einrichtungen 22, 23 zur Phasenberechnung (Cordic-Algorithmus und Phase Unwrapping) vorgesehen, wobei der Einrichtung 22 ein zweites Taktsignal t2 zugeführt wird. Die Einrichtung 22 liefert als Ausgangssignal ein die Phase kennzeichnendes Signal $\Upsilon$, aus dem in der Einrichtung 23 eine Phase $\Upsilon_z$ mit einem stetigen Phasenverlauf berechnet wird. Die Frequenzschätzeinrichtung 7 weist weiter eine Einrichtung 24 zur Durchführung einer linearen Regression auf, wie dies bereits auch in dem Aufsatz "Anfangssynchronisation der Mobilstation im D-Netz", PKI Technische Mitteilungen 1/1990, Seiten 43 bis 49, beschrieben ist. Am Ausgang der Einrichtung 24 zur Durchführung der linearen Regression liegen Signale $\hat{s}$, $S_N$, wobei das Signal $\hat{s}$ Frequenzschätzwerte und das Signal $S_N$ den quadratischen Abstand des geschätzten und des tatsächlichen Phasenverlaufs kennzeichnet, so daß im folgenden das Bezugszeichen $\hat{s}$ auch zur Kennzeichnung eines Frequenzschätzwertes und das Bezugszeichen $S_N$ zur Kennzeichnung des quadratischen Abstandes verwendet wird. Das Signal $\hat{s}$ wird einem Mittelwertbildner 25 zugeführt, an dessen Ausgang ein eine Frequenzabweichung kennzeichnendes Signal f' anliegt. Das Signal $S_N$ wird einem Kehrwertbildner 26 zugeführt. Am Ausgang des Kehrwertbildners 26 liegt ein als Gütemaß zur Bewertung der Zuverlässigkeit der jeweiligen Frequenzschätzung dienendes Signal g, das im folgenden auch als Gütemaß g bezeichnet wird. Das Gütemaß wird an eine Einrichtung 27 weitergeleitet, die die Signalwerte des Gütemaßes, die einen vorgebbaren Schwellwert unterschreiten, ausscheidet. Am Ausgang der Einrichtung 27 liegt ein modifiziertes Gütemaß $g_s$, welches für eine gewichtete Mittelwertbildung dem Mittelwertbildner 25 zugeführt wird. Das modifizierte Gütemaß $g_s$ wird darüberhinaus einer Entscheidungseinrichtung 28, 29, 30 zugeführt, an deren Ausgang ein zweites Entscheidungssignal b anliegt. Die Entscheidungseinrichtung 28, 29, 30 besteht aus einem Summierer 28, einem nachgeschalteten Schwellwertschalter 29 sowie einem Entscheider 30.

Die Verarbeitung des Digitalsignals z erfolgt bis zur Ermittlung der Signale g, b im wesentlichen in der bereits in PKI Technische Mitteilungen 1/1990, Seiten 43 bis 49, beschriebenen Art und Weise. Dabei erfolgt in der Frequenzschätzeinrichtung 7 nach der Umwandlung ins Basisband und nachdem in der Erkennungseinrichtung 6 die möglichen Impulslagen des Auftretens von Frequenzkontrollsignalen bestimmt wurden, die Ermittlung der Frequenzabweichung f' zwischen dem Lokaloszillator des Mobilfunkempfängers und einer Feststation. Dabei werden die Werte, die nicht von einem Frequenzkontrollsignal herrühren, übergangen. In der Einrichtung 22 zur Phasenberechnung erfolgt zunächst eine Berechnung des Hauptwertes der Phase des komplexen Basisbandsignals z, z.B. mittels des CORDIC-Algorithmus. Anschließend wird in der Einrichtung 23 ein stetiger Phasenverlauf $\Upsilon$ hergestellt, indem alle Phasensprünge in der berechneten Phase $\Upsilon_z$ beseitigt werden (Phase unwrapping), die darauf zurückzuführen sind, daß der berechnete Hauptwert der Phase $\Upsilon_z$ auf den Bereich $\pm\pi$ beschränkt ist, während die gesuchte Phase des empfangenen Digitalsignals kontinuierlich verläuft und beliebige Werte annehmen kann. Mit dem kontinuierlichen Phasenverlauf wird in der Einrichtung 24 eine lineare Regression zur Berechnung der Frequenzschätzwerte $\hat{s}$ durchgeführt, wie dies auch in dem Aufsatz "Anfangssynchronisation der Mobilstation im D-Netz", PKI Technische Mitteilungen 1/1990, Seite 43 bis 49, beschrieben ist. Dabei kann die Frequenzschätzwert $\hat{s}$ gemäß folgender Gleichung ermittelt werden:

$$\hat{s} \;=\; c \cdot \sum_{m=1}^{M} m \left[ \Upsilon(M+m+1) - \Upsilon(M-m+1) \right] \; ;$$

M=(N-1)/2; N ungerade

Dabei kennzeichnet N die Anzahl der Messwerte pro Frequenzkontrollsignal. Die lineare Regression wird nur für die Dauer eines Frequenzkontrollsignals durchgeführt. Der Vorfaktor c berücksichtigt dabei den durch die gewählte Implementierung gegebenen Propotionalitätsfaktor zur Eichung der Meßwerte. Anschließend erfolgt im Mittelwertbildner 25 eine gewichtete Mittelwertbildung aller am Ausgang des Einrichtung 24 anliegenden Frequenschätzzwerte $\hat{s}$, so daß sich die am Ausgang des Mittelwertbildners 25 für die Frequenzabweichung f' ergibt:

$$f' \;=\; \sum_{i=1}^{I} g_s(i) \cdot \hat{s}(i) \; / \; \sum_{i=1}^{I} g_s(i) \; ;$$

Dabei kennzeichnet I die Anzahl der durchgeführten Messungen. Als Ergebnis der gewichteten Mittelwertbildung liegt am Ausgang des Mittelwertbildners 25 das Signal f', welches die Frequenzabweichung zwischen dem Lokaloszillator und dem Oszillator der Feststation kennzeichnet. Bei der gewichteten Mittelwertbildung geht jeder Frequenzschätzwert $\hat{s}$ mit einem Gewicht in die Mittelung ein, das der modifizierten Güte $g_s$ der Frequenzschätzung entspricht. Zur Bestimmung dieses Gütemaßes wird in der Einrichtung 24 neben den Frequenzschätzwerten $\hat{s}$ auch der quadratische Abstand $S_N$ des geschätzten und des tatsächlichen Phasenverlaufs ermittelt. Ein möglicher Weg zur Berechnung von $S_N$ ist:

$$S_N \;=\; N \sum_{n=1}^{N} \Upsilon^2(n) \;-\; \left( \sum_{n=1}^{N} \Upsilon(n) \right)^2 \;-\; \frac{1}{c^2}\,\frac{12}{N^2-1}\,(\hat{s})^2 \; .$$

In Kehrwertbildner 26 wird der Kehrwert des quadratischen Abstandes $S_N$ berechnet. Man erhält somit das Gütemaß g zur Beurteilung der Zuverlässigkeit der betreffenden Frequenzschätzung. Erst durch Hinzunahme dieses Gütemaßes g bzw. des modifizierten Gütemaßes $g_s$ zur gewichteten Mittelung im Mittelwertbildner 25 wird die erforderliche Genauigkeit bei der Bestimmung der Frequenzabweichung f' unter Fading-Bedingungen erzielt. Eine nochmalige Verbesserung in der Frequenzbestimmung wird erreicht, wenn das Gütemaß g vor der Mittelung durch einen geeignet gewählten Schwellwert in der Einrichtung 27 modifiziert wird. Hierbei werden alle Werte zu Null gesetzt, die diesen Schwellwert unterschreiten. Das Gütemaß g kann, wie in Fig. 3 angedeutet ist, als Signal b auch mit Hilfe der Entscheidungseinrichtung 28, 29, 30, die entsprechend der im Zusammenhang mit Fig. 2 beschriebenen Entscheidungseinrichtung arbeitet, als zweites Entscheidungssignal b ausgewertet werden. Das Entscheidungssignal b wird auch bei der Ermittlung/Detektion des Frequenzkontrollsignals verwendet und bildet ergänzend zum Signal a ein zweites Entscheidungssignal für die Entscheidung darüber, ob ein Frequenzkontrollsignal gefunden wurde oder nicht, wie dies in Fig. 1 dargestellt und im Zusammenhang mit Fig. 1 auch beschrieben ist. Zur Erzeugung des Entscheidungssignals b werden alle ermittelten modifizierten Gütemaße im Summierer 28 summiert, das Ausgangssignal des Summierers 28 wird dem Schwellwertschalter 29 und dem nachgeschalteten Entscheider 30 zugeführt.

**Patentansprüche**

1. Mobilfunkempfänger (2) für ein Funkübertragungssystem mit einer Erkennungseinrichtung (6), die vorgesehen ist, ein empfangenes Digitalsignal (e) nach Impulsen (i) eines im Digitalsignal (e) auf einer vorgebbaren Frequenz enthaltenen Frequenzkontrollsignals abzusuchen und deren Impulslagen (t) zu ermitteln, und mit einer Frequenzschätzeinrichtung (7), die vorgesehen ist zur Bildung von Frequenzschätzwerten $(\hat{s})$ für die vorgebbare Frequenz, <u>dadurch gekennzeichnet,</u> daß die Erkennungseinrichtung (6) einen Mittelwertbildner (14) aufweist, der vorgesehen ist zur mit Gewichtungsfaktoren (Us) gewichteten Mittelwertbildung von innerhalb aufeinanderfolgender Beobachtungsintervalle ermittelten Impulslagen (t), wobei die Gewichtungsfaktoren (Us) von der jeweiligen Impulshöhe (U) der Impulse (i) abhängig sind.

2. Mobilfunkempfänger nach Anspruch 1, <u>dadurch gekennzeichnet,</u> daß die Gewichtungsfaktoren (Us) proportional zur jeweiligen Impulshöhe (U) der Impulse (i) sind.

3. Mobilfunkempfänger nach einem der Ansprüche 1 oder 2, <u>dadurch gekennzeichnet,</u> daß die Erkennungseinrichtung (6) einen ersten Schwellwertbildner (16) aufweist, der vorgesehen ist, nur die Impulse (i) zu berücksichtigen, deren Impulshöhen (U) einen vorgebbaren Schwellwert überschreiten.

4. Mobilfunkempfänger nach einem der Ansprüche 1 bis 3, <u>dadurch gekennzeichnet,</u> daß die Erkennungseinrichtung (6) und/oder die Frequenzschätzeinrichtung (7) ein Bandpaßfilter zur Filterung des Digitalsignals (e) bzw. eines aus dem Digitalsignal (e) ableitbaren Signals (z) oder einen Frequenzmischer (9, 20) zur komplexen Multiplikation des Digitalsignals (e) oder des aus dem Digitalsignal (e) ableitbaren Signals (z) mit einem vorgebbaren Mischsignal (m1,m2) mit einem nachgeschalteten Tiefpaßfilter (11, 21) insbesondere mit einem linearen Phasengang aufweisen.

**5.** Mobilfunkempfänger nach einem der Ansprüche 1 bis 4,
dadurch gekennzeichnet,
daß die Erkennungseinrichtung (6) nach dem Bandpaß- bzw. Tiefpaßfilter (11, 21) einen Betrags- oder Betragsquadratbildner (12, 22) aufweist und/oder daß die Erkennungseinrichtung (6) eine erste Entscheidungseinrichtung (17, 18, 19) aufweist, die vorgesehen ist, durch Prüfung, ob in einer vorgebbaren Anzahl von Beobachtungsintervallen mindestens ein ermittelter Impuls (i) eine vorgebbare Schwelle überschreitet, ein bei der Ermittlung des Frequenzkontrollsignals berücksichtigtes erstes Entscheidungssignal (a) zu ermitteln.

**6.** Mobilfunkempfänger nach einem der Ansprüche 1 bis 5,
dadurch gekennzeichnet,
daß die Frequenzschätzeinrichtung (7) Mittel (24, 25) zur Bildung eines einem ermittelten Frequenzschätzwert ($\hat{s}$) jeweils zugeordneten Gütemaßes (g) aufweist, das auch zur Ermittlung des Frequenzkontrollsignals verwendbar ist, und/oder daß die Frequenzschätzeinrichtung (7) eine zweite Entscheidungseinrichtung (28, 29, 30) zur Ableitung eines bei der Ermittlung des Frequenzkontrollsignals berücksichtigten zweiten Entscheidungssignals (b) aufweist.

**7.** Mobilfunkempfänger nach Anspruch 6,
dadurch gekennzeichnet,
daß die Mittel zur Bildung des Gütemaßes (g) einen Kehrwertbildner (24) aufweisen, der vorgesehen ist aus dem Kehrwert des quadratischen Abstandes ($S_N$) des geschätzten und tatsächlichen Phasenverlaufs das Gütemaß (g) zu ermitteln.

**8.** Mobilfunkempfänger nach einem der Ansprüche 6 oder 7,
dadurch gekennzeichnet,
daß die Frequenzschätzeinrichtung (7) einen Mittelwertbildner (25) aufweist, der vorgesehen ist, aus einer vor-gebbaren Anzahl von Frequenzschätzwerten ($\hat{s}$) von ermittelten Frequenzkontrollsignalen und den jeweils zugeordneten Gütemaßen (g) zur Nachführung des Oszillators des Mobilfunkempfängers (2) gewichtet gemittelte Schätzwerte (f') zu bilden.

**9.** Mobilfunkempfänger nach einem der Ansprüche 1 bis 8,
dadurch gekennzeichnet,
daß die Frequenzschätzeinrichtung (7) einen zweiten Schwellwertbildner (27) aufweist, der vorgesehen ist, nur die einen vorgebbaren Schwellwert überschreitenden Gütemaße (g) zu berücksichtigen.

**10.** Funkübertragungssystem mit mindestens einer Feststation (1) und mindestens einem Mobilfunkempfänger (2) nach einem der Ansprüche 1 bis 9, wobei das Funkübertragungssystem zur Übertragung von Funksignalen zwischen Feststation (1) und Mobilfunkempfänger (2) vorgesehen ist.

## Claims

1. A mobile radio receiver (2) for a radio transmission system, such a receiver comprising a recognition arrangement (6) for searching a received digital signal (e) for pulses (i) of a frequency correction burst with a predeterminable frequency in the digital signal (e) and for determining their pulse positions (t), and a frequency estimation arrangement (7) for deriving estimates ($\hat{s}$) of the predeterminable frequency, characterized in that the recognition arrangement (6) comprises an averaging circuit (14) for averaging with weight factors (Us) the pulse positions (t) that have been determined in successive observation intervals, the weight factors (Us) being dependent on the individual pulse heights (U) of the pulses (i).

2. The mobile radio receiver as claimed in Claim 1, characterized in that the weight factors (Us) are proportional to the individual pulse heights (U) of the pulses (i).

3. The mobile radio receiver as claimed in one of the Claims 1 or 2, characterized in that the recognition arrangement (6) comprises a first threshold former (16) for taking only those of the pulses (i) into account whose pulse heights (U) exceed a predeterminable threshold.

4. The mobile radio receiver as claimed in one of the Claims 1 to 3, characterized in that the recognition arrangement (6) and/or the frequency estimation arrangement (7) comprise(s) a bandpass filter for filtering the digital signal (e) and a signal (z) that can be derived from the digital signal (e) respectively, or a frequency mixer (9, 20) for the complex multiplication of the digital signal (e) or the signal (z) that can be derived from the digital signal (e) by a predeterminable mixing signal (m1, m2), with a succeeding low-pass filter (11, 21) specifically one with a linear phase shift.

5. The mobile radio receiver as claimed in one of the Claims 1 to 4, characterized in that the recognition arrangement (6) comprises a value former or a value squaring circuit (12, 22) succeeding the bandpass filter and low-pass filter (11, 21) respectively, and/or in that the recognition arrangement (6) comprises a first decision arrangement (17, 18, 19), for determining a first decision signal (a) taken into account when the frequency correction burst was determined, by checking whether in a predeterminable number of observation intervals at least one determined pulse (i) exceeds a predeterminable threshold.

6. The mobile radio receiver as claimed in one of the Claims 1 to 5, characterized in that the frequency estimation arrangement (7) comprises means (24, 25) for forming a quality parameter (g) assigned to each determined frequency estimate ($\hat{s}$), which quality parameter can also be used for determining the frequency correction burst, and/or in that the frequency estimation arrangement (7) comprises a second decision arrangement (28, 29, 30) for deriving a second decision signal (b) which is taken into account for determining the frequency correction burst.

7. The mobile radio receiver as claimed in Claim 6, characterized in that the means for forming the quality parameter (g) comprises a reciprocator (24) for determining the quality parameter (g) from the reciprocal value of the squared distance ($S_N$) of the estimated and the real phase variation.

8. The mobile radio receiver as claimed in one of the Claims 6 or 7, characterized in that the frequency estimation arrangement (7) comprises an averaging circuit (25) for forming weighted averaged estimates (f') from a predeterminable number of frequency estimates ($\hat{s}$) of determined frequency correction bursts and the individually assigned quality parameters (g) for the tracking by the oscillator of the mobile radio receiver (2).

9. The mobile radio receiver as claimed in one of the Claims 1 to 8, characterized in that the frequency estimation arrangement (7) comprises a second threshold former (27) for taking into account only the quality parameters (g) that exceed a predeterminable threshold.

10. A radio transmission system comprising at least a base station (1) and at least a mobile radio receiver (2) as claimed in one of the Claims 1 to 9, the radio transmission system being provided for transmitting radio signals between base station (1) and mobile radio receiver (2).

**Revendications**

1. Récepteur radio mobile (2) pour un système de transmission radio comprenant un dispositif de reconnaissance (6), qui est censé analyser un signal numérique reçu (e) à la recherche d'impulsions (i) d'un signal de contrôle de fréquence contenu dans le signal numérique (e) à une fréquence prédéfinie et déterminer leurs positions d'impulsions (t), et comprenant un dispositif d'estimation de fréquence (7), qui est censé former des valeurs estimées de fréquence ($\hat{s}$) pour la fréquence prédéfinie, caractérisé en ce que le dispositif de reconnaissance (6) comprend un dispositif de moyennage (14) qui est censé former la moyenne, pondérée par des facteurs de pondération (Us), de positions d'impulsions (t) déterminées dans des intervalles d'observation successifs, les facteurs de pondération (Us) étant fonction de la hauteur d'impulsion respective (U) des impulsions (i).

2. Récepteur radio mobile suivant la revendication 1, caractérisé en ce que les facteurs de pondération (Us) sont proportionnels à la hauteur d'impulsion respective (U) des impulsions (i).

3. Récepteur radio mobile suivant la revendication 1 ou 2, caractérisé en ce que le dispositif de reconnaissance (6) comprend un premier dispositif formateur de valeur de seuil (16), qui est censé ne tenir compte que des impulsions (i) dont la hauteur d'impulsion (U) dépasse une valeur de seuil prédéfinie.

4. Récepteur radio mobile suivant l'une quelconque des revendications 1 à 3, caractérisé en ce que le dispositif de reconnaissance (6) et/ou le dispositif d'estimation de fréquence (7) comprennent un filtre passe-bande pour filtrer le signal numérique (e) ou un signal (z) pouvant être dérivé du signal numérique (e) ou un mélangeur (9, 20) pour la multiplication complexe du signal numérique (e) ou du signal (z) pouvant être dérivé du signal numérique (e) avec un signal de mélange prédéfini (m1, m2) avec un filtre passe-bas (11, 21) monté en aval, présentant en particulier une réponse en phase linéaire.

5. Récepteur radio mobile suivant l'une quelconque des revendications 1 à 4, caractérisé en ce que le dispositif de reconnaissance (6) comprend après le filtre passe-bande ou passe-bas (11, 21) un dispositif formateur de valeur absolue ou de valeur absolue au carré (12, 22) et/ou que le dispositif de reconnaissance (6) comprend un premier dispositif de décision (17, 18, 19), qui est censé déterminer, en vérifiant si au moins une impulsion déterminée (i), dans un nombre sélectionnable d'intervalles d'observation, dépasse un seuil prédéfinie, un premier signal de décision (a) considéré lors de la détermination du signal de contrôle de fréquence.

6. Récepteur radio mobile suivant l'une quelconque des revendications 1 à 5, caractérisé en ce que le dispositif d'estimation de fréquence (7) comprend des moyens (24, 25) pour former une mesure de qualité (g) qui est chaque fois associée à une valeur estimée de fréquence déterminée ($\hat{s}$) et qui peut également être utilisée pour déterminer le signal de contrôle de fréquence, et/ou que le dispositif d'estimation de fréquence (7) comprend un deuxième dispositif de décision (28, 29, 30) pour dériver un deuxième signal de décision (b) considéré lors de la détermination du signal de contrôle de fréquence.

7. Récepteur radio mobile suivant la revendication 6, caractérisé en ce que les moyens destinés à la formation de la mesure de qualité (g) comprennent un dispositif formateur de valeur inverse (24), qui est censé déterminer à partir de la valeur inverse de la distance quadratique ($S_N$) des réponses en phase estimée et réelle de la mesure de qualité (g).

8. Récepteur radio mobile suivant la revendication 6 ou 7, caractérisé en ce que le dispositif d'estimation de fréquence (7) comprend un dispositif de moyennage (25), qui est censé former, à partir d'un nombre prédéfini de valeurs estimées de fréquence ($\hat{s}$) de signaux de contrôle de fréquence déterminés et des mesures de qualité (g) respectivement associées, la moyenne de valeurs estimées (f') pondérée en vue du réglage de l'oscillateur du récepteur radio mobile (2).

9. Récepteur radio mobile suivant l'une quelconque des revendications 1 à 8, caractérisé en ce que le dispositif d'estimation de fréquence (7) comprend un deuxième dispositif formateur de valeur de seuil (27), qui est censé ne tenir compte que des mesures de qualité (g) dépassant une valeur de seuil prédéfinie.

10. Système de transmission radio avec au moins une station fixe (1) et au moins un récepteur radio mobile (2) suivant l'une quelconque des revendications 1 à 9, le système de transmission radio étant prévu pour la transmission de signaux radio entre la station fixe (1) et le récepteur radio mobile (2).

FIG.1

FIG.2

FIG.3